# EUROPEAN PATENT SPECIFICATION

(11) **EP 2 538 729 B1**
(45) Date of publication and mention of the grant of the patent: **29.08.2018**
(21) Application number: 12161421.8
(22) Date of filing: 27.03.2012
(51) Int. Cl.: H04W 48/20, H04W 76/10

(54) **Method for controlling network connection of wireless network device and associated wireless network device**
Verfahren zur Steuerung des Netzwerkanschlusses einer drahtlosen Netzwerkvorrichtung und zugehörige drahtlose Netzwerkvorrichtung
Procédé de contrôle de la connexion au réseau de dispositif de réseau sans fil et dispositif de réseau sans fil associé

(30) Priority: 24.06.2011 US 201161500623 P; 09.12.2011 TW 100145525
(43) Date of publication of application: 26.12.2012
(73) Proprietor: Acer Incorporated, New Taipei City 221 (TW)
(72) Inventor: Lin, Yung-Sen, 221 New Taipei City (TW); Chuang, Tzu-Lung, 221 New Taipei City (TW)
(74) Representative: Becker Kurig Straus

(56) References cited:
- US-A1- 2005 148 332
- US-A1- 2007 123 254
- US-A1- 2008 247 344
- US-A1- 2009 124 284
- US-B1- 7 873 377
- Anonymous: "Boot Process and BCDEdit", , 8 July 2009 (2009-07-08), XP055422555, Retrieved from the Internet: URL:https://technet.microsoft.com/en-us/li brary/ee221031(v=ws.10).aspx [retrieved on 2017-11-07]

## Description

### Field of the Invention

The present invention relates to a method for controlling a wireless network device to quickly establish a link after being woken up from a sleep mode and an associated wireless network according to the pre-characterizing clauses of claims 1 and 6, respectively.

### Background of the Invention

When a notebook or other mobile communication device enters a sleep mode, its network will be disconnected to save power. After the notebook is woken up from the sleep mode, the network connection will be re-established. During the re-establishment process, the notebook needs to scan all neighboring access points, and compare these neighboring access points in order to select one access point for establishing a link. Because these steps may take from 1 to 8 seconds, a certain amount of time is wasted before a user can begin to use the network.

US 2008/0247344 A1 discloses techniques for increasing the battery life on a mobile device by decreasing the energy consumption of the mobile device's wireless fidelity (Wi-Fi) interface. The mobile device's Wi-Fi interface is automatically disabled when the device is not engaged in a voice over internet protocol (VoIP) call via the Wi-Fi interface. When a VoIP call is initiated on the device, or when the device receives a wake up call from a server via its Cellular interface, the Wi-Fi interface is automatically enabled. Using its Wi-Fi interface, the mobile device then connects to an IP-based network via a Wi-Fi access point. The server then initiates a direct call, wherein VoIP technology is used by the mobile device, between the mobile device and a VoIP calling device.

US 7873377 B1 discloses a method and system for implementing a background scan in a wireless device having at least two independent radio interfaces. Aspects of the exemplary embodiment include using a first one of the radio interfaces for transferring data with an access point; and simultaneously using a second one of the radio interfaces for receiving scan data to search for a new access point.

US 2009/0124284 A1 discloses a WiFi communication framework that is particularly suitable for mobile devices. The framework provides comprehensive tools for establishing seamless Internet access for web applications on mobile handheld devices. In addition, it can provide user location to enable applications requiring such information. The framework may be implemented as a client on the handheld device. The broadband radio on the device is generally kept off. When the user activates an application requiring broadband service, communication protocol is established, causing the client to turn the broadband radio on and to establish connection to an available WiFi access point.

### Summary of the Invention

This in mind, the invention aims at providing a solution to the above-mentioned problem. The invention relates to a method for controlling a network connection of a wireless network device according to claim 1 and to a wireless network device according to claim 3. The dependent claims pertain to corresponding further developments and improvements.
In the following, the invention is further illustrated by way of example, taking reference to the following drawings. Thereof:
FIG. 1 is a diagram illustrating a wireless network device according to one embodiment of the present invention;
FIG. 2 is a flowchart of a method for controlling a network connection of the wireless network device before the wireless network device enters a sleep mode according to one embodiment of the present invention;
FIG. 3 is a flowchart of the method for controlling the network connection of the wireless network device after the wireless network device wakes up from the sleep mode according to one embodiment of the present invention.
FIG. 4 is a flowchart of a detail of the Step S304 shown in FIG. 3; and
FIG. 5 is a diagram illustrating timing of the operating steps of the operating system, wireless network driver and network component shown in FIG. 4.

### Detailed Description

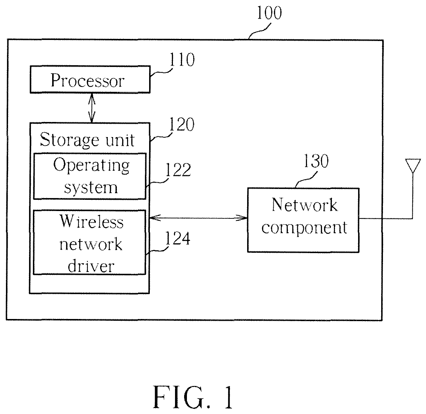

The embodiments and/or examples of the following description which are not covered by the appended claims are considered as not being part of the present invention. Please refer to FIG. 1, which illustrates a wireless network device 100 according to one embodiment of the present invention. As shown in FIG. 1, the wireless network device 100 includes a processor 110, a storage unit 120 and a network component 130, where the storage unit 120 stores an operating system 122 and a wireless network driver 124. In addition, in this embodiment, the wireless network device 100 can be a notebook, a tablet computer or any other mobile communication device having wireless network functionality.

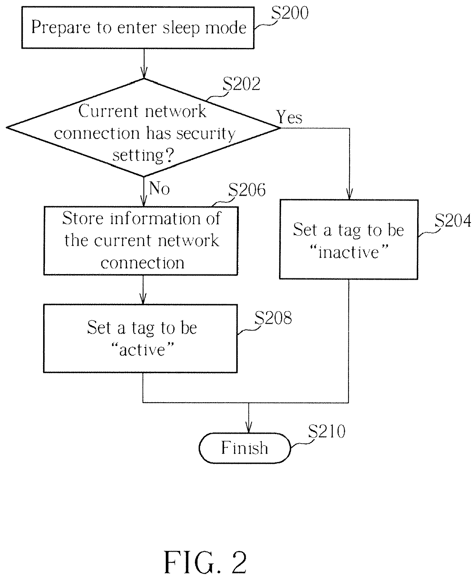

Please refer to FIG. 1 and FIG. 2 together. FIG. 2 is a flowchart of a method for controlling a network connection of the wireless network device 100 before the wireless network device 100 enters a sleep mode according to one embodiment of the present invention. It is noted that the "sleep mode" in the specification includes standby mode, hibernate mode or any other mode which can save power. In the sleep mode, a portion of operations of the wireless network device 100 are stopped, and the wireless network is disconnected. In addition, the flow shown in FIG. 2 is for illustrative purposes only; provided the results are substantially the same, the steps are not limited to be executed according to the exact order shown in FIG. 2. Referring to FIG. 2, the flow is described as follows.

In Step S200, the wireless network device 100 prepares to enter the sleep mode. Then, in Step S202, the wireless network driver 124 checks whether a current network connection has a security setting or not; that is, the wireless network driver 124 checks if the current connected access point requires a password to establish a link. If the current network connection has the security setting, the flow enters Step S204 to set a tag to be "inactive" that indicates the current connected access point has the security setting; if the current network connection does not have the security setting, the flow enters Step S206. In Step S206, the wireless network device 100 stores current network connection information, such as service set identifier (SSID) and channel information, into a storage unit (e.g. memory in a Basic Input/Output System (BIOS)). Then, in Step S208, the wireless network driver 124 sets the tag to be "active", which indicates that the current connected access point does not have the security setting. Finally, the flow enters Step S210 to finish the above-mentioned network connection checking flow, and the wireless network device 100 enters the sleep mode.

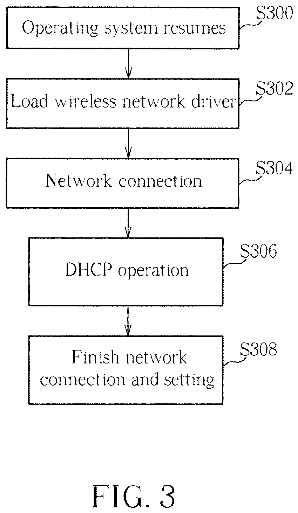

Please refer to FIG. 1 and FIG. 3 together. FIG. 3 is a flowchart of the method for controlling the network connection of the wireless network device 100 after the wireless network device 100 wakes up from the sleep mode according to one embodiment of the present invention. Referring to FIG. 3, the flow is described as follows.

In Step S300, the operating system 122 of the wireless network device 100 resumes. Then, in Step S302, the operating system 122 loads the wireless network driver 124. In Step S304, the wireless network device 100 starts the network connection. Then, in Step S306, the wireless network device 100 performs a dynamic host configuration protocol (DHCP) operation to obtain an IP address. Finally, the flow enters Step S308 to finish the network connection and setting.

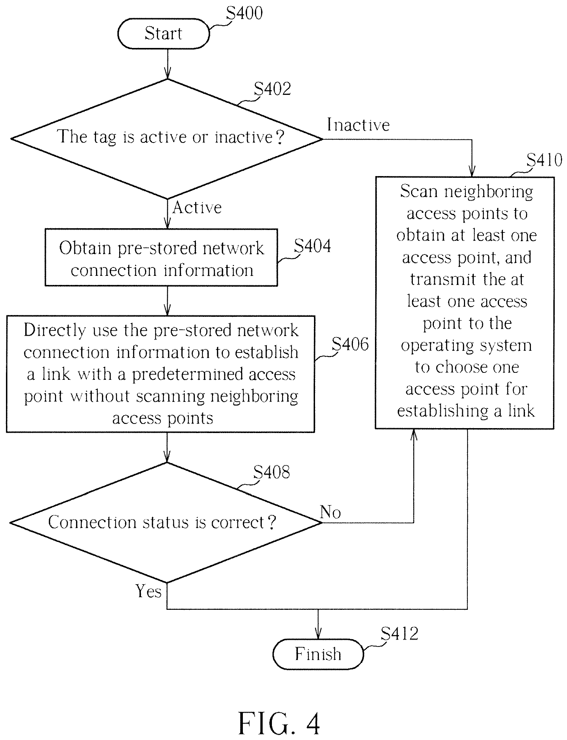

Please refer to FIG. 4, which is a flowchart of a detail of the Step S304. Referring to FIG. 4, the flow is described as follows.

In Step S400, the flow starts. Then, in Step S402, the wireless network driver 124 checks the tag set in Step S204 or Step S208. If the tag is "inactive" (i.e. the previous connected access point has the security setting), the flow enters Step S410; and if the tag is "active" (i.e. the previous connected access point does not have the security setting), the flow enters Step S404. Then, in Steps S404 and S406, the wireless network driver 124 directly obtains the network connection information, which is stored in Step S206, from the storage unit, and directly uses this pre-stored network connection information to establish a link with a predetermined access point without scanning neighboring access points, where the predetermined access point is a last access point connected to the wireless network device 100 before the wireless network device 100 enters the sleep mode. Then, in Step S408, a connection status is checked. If the connection status is correct, the flow enters Step S412 to finish this flow; and if the connection status is incorrect, the flow enters Step S410. In Step S410, the wireless network driver 124 scans the neighboring access points to obtain at least one access point, and transmits the (at least one) access point to the operating system 122 to choose one access point for establishing a link by the wireless network driver 124. Then, the flow enters Step S412 to finish this flow.

Referring to the flow shown in FIG. 4, when the previous connected access point does not have the security setting, the wireless network driver 124 directly uses the pre-stored network connection information to establish a link under the condition that the wireless network driver 124 does not scan the neighboring access points. The whole flow can be finished within about 0.4 seconds. Therefore, compared with the prior art 1 - 8 seconds connection time, the present invention speeds up the network connection time after the wireless network device 100 is woken up from the sleep mode.

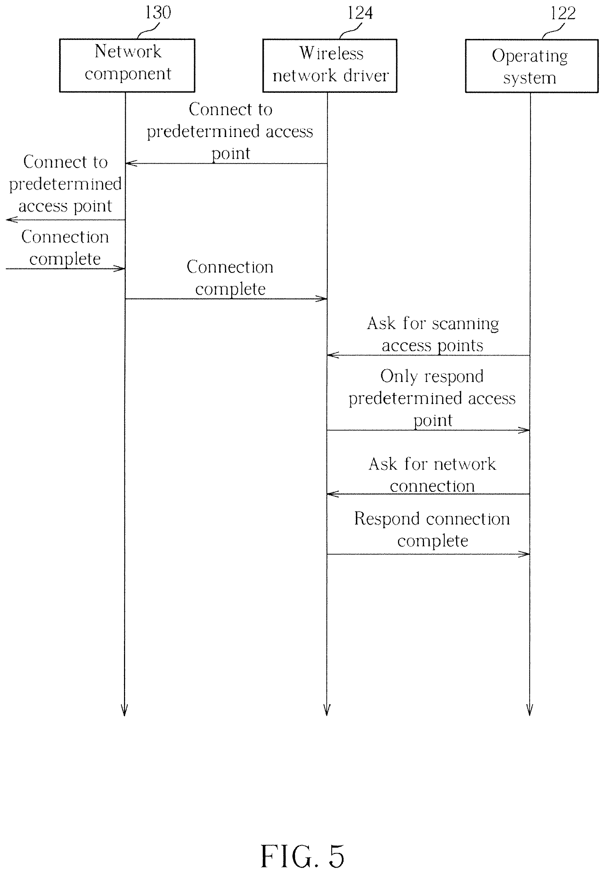

In addition, because the wireless network driver 124 directly uses the pre-stored network connection information to establish a link when the previous connected access point does not have the security setting, later when the operating system 122 transmits a command to the wireless network driver 124 to ask for scanning neighboring access points, the wireless network driver 124 only responds the information of the predetermined access point (i.e. information of the current connected access point) to the operating system 122. In addition, when the operating system 122 transmits a command to the wireless network driver 124 to ask for establishing a link, the wireless network driver 124 directly responds with a connection complete message to the operating system 122. Please refer to FIG. 5, which is a diagram illustrating timing of the above operating steps of the operating system 122, wireless network driver 124 and network component 130.

Briefly summarized, in the method for controlling a network connection of a wireless network device and associated wireless network device of the present invention, the wireless network driver can directly use the information of the previous connected access point to establish a link under the condition that the wireless network driver does not scan access points. Therefore, the wireless network device can quickly establish a link after being woken up from a sleep mode, and the user can use the network without having to wait a long time.

## Claims

1. A method for controlling a network connection of a wireless network device (100), comprising:
before a portion of operations of the wireless network device (100) enters a sleep mode and a wireless network of the wireless network device (100) is disconnected:
setting a tag to indicate if a connected access point has a security setting or not;
storing information of a current network connection between the wireless network device (100) and the connected access point as a pre-stored network connection information if the connected access point does not have a security setting;
after a portion of the wireless network device (100) is woken up from the sleep mode:
resuming an operating system (122) of the wireless network device (100);
loading a wireless network driver (124) by the operating system (122);
and **characterized by**:
utilizing the pre-stored network connection information to determine whether the previous connected access point has the security setting or not by checking the tag; and
when the tag indicates that the previous connected access point does not have the security setting, the wireless network driver (124) directly utilizes the pre-stored network connection information to connect to the previous connected access point without scanning the access points to obtain an IP address through a dynamic host configuration protocol, DHCP, and checking if the connection status is correct or incorrect;
when the tag indicates that the previous connected access point has the security setting or when the connection status is incorrect, the wireless network driver (124) scans the access points to obtain at least one access point, the operating system (122) receives the at least one access point and chooses one access point, and the operating system (122) sends the chosen access point to the wireless network driver (124) to establish a link.

2. The method of claim 1, further **characterized by**:
after the wireless network device (100) is woken up from the sleep mode:
receiving a command from an operating system (122) to ask for scanning the access points; and
when the previous connected access point does not have the security setting, and after the wireless network driver (124) directly utilizes the pre-stored network connection information to connect to the previous connected access point, the wireless network driver (124) only responds with the previous connected access point to the operating system (122).

3. A wireless network device (100), comprising the following components of
a storage unit (120), for storing an operating system (122) and a wireless network driver (124); and
a network component (130);
**characterized in that** the components are configured to perform the following actions:
before a portion of operations of the wireless network device (100) enters a sleep mode and a wireless network of the wireless network device (100) is disconnected, the wireless network driver (124) sets a tag to indicate if a connected access point has a security setting or not, and stores information of a current network connection between the wireless network device (100) and the connected access point as a pre-stored network connection information if the connected access point does not have a security setting; and after a portion of the wireless network device (100) is woken up from the sleep mode, the operating system (122) of the wireless network device (100) resumes and loads the wireless network driver (124); the wireless network driver (124) utilizes the pre-stored network connection information to determine whether the previous connected access point has the security setting or not by checking the tag; and when tag indicates that the previous connected access point does not have the security setting, the wireless network driver (124) directly utilizes the pre-stored network connect-tion information to connect to the previous connected access point via the network component (130) without scanning the access points to obtain an IP address through a dynamic host configuration protocol, DHCP, and checks if the connection status is correct or incorrect; wherein when the tag indicates that the previous connected access point has the security setting or when the connection status is incorrect,
setting, the wireless network driver (124) scans the access points to obtain at least one access point, the operating system (122) receives the at least one access point and chooses one access point, and the operating system (122) sends the chosen access point to the wireless network driver (124) to establish a link.

4. The wireless network device (100) of claim 3, **characterized in that** after the wireless network device (100) is woken up from the sleep mode, the wireless network driver (124) receives a command from the operating system (122) to ask for scanning the access points; and when the previous connected access point does not have the security setting, and after the wireless network driver (124) directly utilizes the pre-stored network connection information to connect to the previous connected access point, the wireless network driver (124) only responds with the previous connected access point to the operating system (122).

## Patentansprüche

1. Verfahren zur Steuerung einer Netzwerkverbindung eines Drahtlosnetzwerk-Geräts (100), welches umfasst:
bevor ein Teil des Betriebs des Drahtlosnetzwerk-Gerät (100) in den Schlafmodus geht und ein Drahtlosnetzwerk des Drahtlosnetzwerk-Geräts (100) getrennt wird:
Setzen eines Kennzeichens, um anzuzeigen, ob ein verbundener Access Point eine Sicherheitseinstellung aufweist oder nicht; Speichern der Information einer aktuellen Netzwerkverbindung zwischen dem Drahtlosnetzwerk-Gerät (100) und dem verbundenen Access Point als eine vorgespeicherte Netzwerkverbindungsinformation, wenn der verbundene Access Point keine Sicherheitseinstellung aufweist;
nachdem ein Teil des Drahtlosnetzwerk-Geräts (100) aus dem Schlafmodus geholt wird:
Wiederaufnehmen eines Betriebssystems (122) des Drahtlosnetzwerk-Geräts (100);
Laden eines Drahtlosnetzwerk-Treibers (124) durch das Betriebssystem (122);
und **gekennzeichnet durch**:
Verwenden der vorgespeicherten Netzwerkverbindungs-Information, um **durch** Überprüfen des Kennzeichens zu bestimmen, ob der vorher verbundene Access Point die Sicherheitseinstellung aufweist oder nicht; und
wenn das Kennzeichen anzeigt, dass der vorher verbundene Access Point keine Sicherheitseinstellung aufweist, dann verwendet der Drahtlosnetzwerk-Treiber (124) direkt die vor-gespeicherte Netzwerkverbindungsinformation, um, ohne die Access Points zu scannen, mit dem vorher verbundenen Access Point zu verbinden, um über ein Dynamic Host Configuration Protocol, DHCP, eine IP-Addresse zu erhalten, und überprüft, ob der Verbindungsstatus korrekt oder inkorrekt ist;
wenn das Kennzeichen anzeigt, dass der vorher verbundene Access Point die Sicherheitseinstellung aufweist, oder wenn der Verbindungsstatus inkorrekt ist, dann scannt der Drahtlosnetzwerk-Treiber (124) die Access Points, um einen Access Point zu erhalten, worin das Betriebssystem (122) den mindestens einen Access Point empfängt und einen Access Point wählt, und worin das Betriebssystem (122) dem Drahtlosnetzwerk-Treiber (124) den gewählten Access Point übermittelt, um eine Verknüpfung herzustellen.

2. Verfahren nach Anspruch 1, weiter **gekennzeichnet durch**:
nachdem das Drahtlosnetzwerk-Gerät (100) aus dem Schlafmodus geholt wurde:
Empfangen eines Befehls von einem Betriebssystem (122), um zum Scannen der Access Points aufzufordern; und
wenn der vorher verbundene Access Point die Sicherheitseinstellung nicht aufweist, und nachdem der Drahtlosnetzwerk-Treiber (124) die vorher-gespeicherte Netzwerkverbindungsinformation direkt verwendet, um mit dem vorher verbundenen Access Point zu verbinden, dann antwortet der Drahtlosnetzwerk-Treiber (124) dem Betriebssystem (122) nur mit dem vorher verbundenen Access Point.

3. Drahtlosnetzwerk-Gerät (100), welches die folgenden Komponenten umfasst:
eine Speichereinheit(120), zum Speichern eines Betriebssystems (122) und eines Drahtlosnetzwerk-Treibers (124); und
eine Netzwerkkomponente (130);
**dadurch gekennzeichnet, dass** die Komponenten ausgestaltet sind, die folgenden Aktionen durchzuführen:
bevor ein Teil des Betriebs des Drahtlosnetzwerk-Gerät (100) in einen Schlaf-Modus geht und ein Drahtlosnetzwerk des Drahtlosnetzwerk-Gerät (100) getrennt wird, setzt der Drahtlosnetzwerk-Treiber (124) ein Kennzeichen, um anzuzeigen, ob ein verbundener Access Point eine Sicherheitseinstellung aufweist oder nicht, und speichert Informationen einer aktuellen Netzwerkverbindung zwischen dem Drahtlosnetzwerk-Gerät (100) und dem verbundenen Access Point als eine vor-gespeicherte Netzwerkverbindungsinformation, wenn der verbundene Access Point keine Sicherheitseinstellung aufweist; und nachdem ein Teil des Drahtlosnetzwerk-Geräts (100) aus dem Schlaf-Modus geholt wird, dann nimmt das Betriebssystem (122) des Drahtlosnetzwerk-Geräts (100) die Tätigkeit wieder auf und lädt den Drahtlosnetzwerk-Treiber (124); worin der Drahtlosnetzwerk-Treiber (124) die vorgespeicherte Netzwerkverbindungsinformation verwendet, um durch Überprüfen des Kennzeichens zu bestimmen, ob der vorher verbundene Access Point die Sicherheitseinstellung aufweist oder nicht; und wenn das Kennzeichen anzeigt, dass der vorher verbundene Access Point die Sicherheitseinstellung nicht aufweist, dann verwendet der Drahtlosnetzwerk-Treiber (124) direkt die vorher-gespeicherte Netzwerkverbindungsinformation, um ohne die Access Points zu scannen, mit dem vorher verbundenen Access Point über die Netzwerkkomponente (130) zu verbinden, um eine IP-Addresse durch eine Dynamic Host Configuration Protocol, DHCP, zu erhalten und überprüft, ob der Verbindungsstatus korrekt ist oder inkorrekt;
worin wenn das Kennzeichen anzeigt, dass der vorher verbundene Access Point die Sicherheitseinstellung aufweist oder wenn der Status inkorrekt ist, dann scannt der Drahtlosnetzwerk-Treiber (124) die Access Points, um mindestens einen Access Point zu erhalten, das Betriebssystem (122) empfängt den mindestens einen Access Point und wählt einen Access Point, und das Betriebssystem (122) sendet den gewählten Access Point zu dem Drahtlosnetzwerk-Treiber (124), um eine Verknüpfung zu erstellen.

4. Drahtlosnetzwerk-Gerät (100) nach Anspruch 3, **dadurch gekennzeichnet, dass** das Drahtlosnetzwerk-Gerät (100) aus dem Schlaf-Modus geholt wird, der Drahtlosnetzwerk-Treiber (124) einen Befehl von dem Betriebssystem (122) empfängt, um aufzufordern, die Access Points zu scannen; und wenn der vorher verbundene Access Point keine Sicherheitseinstellung aufweist, und nachdem der Drahtlosnetzwerk-Treiber (124) direkt die vorher-gespeicherte Netzwerkverbindungsinformation verwendet, um mit dem vorher verbundenen Access Point zu verbinden, dann antwortet der Drahtlosnetzwerk-Treiber (124) nur mit dem vorher verbundenen Access Point zu dem Betriebssystem (122).

## Revendications

1. Procédé de commande d'une connexion réseau d'un dispositif réseau sans fil (100), consistant à :
avant qu'une partie d'opérations du dispositif réseau sans fil (100) entre dans un mode sommeil et qu'un réseau sans fil du dispositif réseau sans fil (100) est déconnecté :
définir une balise pour indiquer si un point d'accès connecté possède un paramètre de sécurité ou non ;
stocker des informations d'une connexion réseau actuelle entre le dispositif réseau sans fil (100) et le point d'accès connecté en tant qu'informations de connexion réseau pré-stockées si le point d'accès connecté ne possède pas de paramètre de sécurité ;
après qu'une partie du dispositif réseau sans fil (100) est réveillée du mode sommeil :
relancer un système d'exploitation (122) du dispositif réseau sans fil (100) ;
charger un pilote de réseau sans fil (124) par l'intermédiaire du système d'exploitation (122) ;
et **caractérisé en ce qu'**il consiste à :
utiliser les informations de connexion réseau pré-stockées pour déterminer si le précédent point d'accès connecté possède le paramètre de sécurité ou non en vérifiant la balise ; et
lorsque la balise indique que le précédent point d'accès connecté ne possède pas le paramètre de sécurité, le pilote de réseau sans fil (124) utilise directement les informations de connexion réseau pré-stockées pour se connecter au précédent point d'accès connecté sans balayer les points d'accès pour obtenir une adresse IP par l'intermédiaire d'un protocole de configuration dynamique des hôtes, DHCP, et en vérifiant si l'état de connexion est correct ou incorrect ;
lorsque la balise indique que le précédent point d'accès connecté possède le paramètre de sécurité ou lorsque l'état de connexion est incorrect, le pilote de réseau sans fil (124) balaie les points d'accès pour obtenir au moins un point d'accès, le système d'exploitation (122) reçoit ledit au moins un point d'accès et choisit un point d'accès, et le système d'exploitation (122) envoie le point d'accès choisi au dispositif réseau sans fil (124) pour établir une liaison.

2. Procédé selon la revendication 1, **caractérisé en outre par le fait qu'**il consiste à :
après que le dispositif réseau sans fil (100) est réveillé du mode sommeil :
recevoir une commande provenant d'un système d'exploitation (122) demandant de balayer les points d'accès ; et
lorsque le précédent point d'accès connecté ne possède pas le paramètre de sécurité, et après que le pilote de réseau sans fil (124) utilise directement les informations de connexion réseau pré-stockées pour se connecter au précédent point d'accès connecté, le pilote de réseau sans fil (124) répond uniquement avec le précédent point d'accès connecté au système d'exploitation (122).

3. Dispositif réseau sans fil (100), comprenant les composants suivants :
une unité de stockage (120), pour stocker un système d'exploitation (122) et un pilote de réseau sans fil (124) ; et
un composant réseau (130) ;
**caractérisé en ce que** les composants sont configurés pour effectuer les actions suivantes :
avant qu'une partie d'opérations du dispositif réseau sans fil (100) entre dans un mode sommeil et qu'un réseau sans fil du dispositif réseau sans fil (100) est déconnecté, le pilote de réseau sans fil (124) définit une balise pour indiquer si un point d'accès connecté possède un paramètre de sécurité ou non, et stocke des informations d'une connexion réseau actuelle entre le dispositif réseau sans fil (100) et le point d'accès connecté en tant qu'informations de connexion réseau pré-stockées si le point d'accès connecté ne possède pas de paramètre de sécurité ; et après qu'une partie du dispositif réseau sans fil (100) est réveillée du mode sommeil, le système d'exploitation (122) du dispositif réseau sans fil (100) est relancé et charge le pilote de réseau sans fil (124) ; le pilote de réseau sans fil (124) utilise les informations de connexion réseau pré-stockées pour déterminer si le précédent point d'accès connecté possède le paramètre de sécurité ou non en vérifiant la balise ; et lorsque la balise indique que le précédent point d'accès connecté ne possède pas le paramètre de sécurité, le pilote de réseau sans fil (124) utilise directement les informations de connexion réseau pré-stockées pour se connecter au précédent point d'accès connecté par l'intermédiaire du composant réseau (130) sans balayer les points d'accès pour obtenir une adresse IP par l'intermédiaire d'un protocole de configuration dynamique des hôtes, DHCP, et vérifie si l'état de connexion est correct ou incorrect ;
dans lequel lorsque la balise indique que le précédent point d'accès connecté possède le paramètre de sécurité ou lorsque l'état de connexion est incorrect, le pilote de réseau sans fil (124) balaie les points d'accès pour obtenir au moins un point d'accès, le système d'exploitation (122) reçoit ledit au moins un point d'accès et choisit un point d'accès, et le système d'exploitation (122) envoie le point d'accès choisi au dispositif réseau sans fil (124) pour établir une liaison.

4. Dispositif réseau sans fil (100) selon la revendication 3, **caractérisé en ce qu'**après que le dispositif réseau sans fil (100) est réveillé du mode sommeil, le pilote de réseau sans fil (124) reçoit une commande provenant du système d'exploitation (122) demandant de balayer les points d'accès ; et lorsque le précédent point d'accès connecté ne possède pas le paramètre de sécurité, et après que le pilote de réseau sans fil (124) utilise directement les informations de connexion réseau pré-stockées pour se connecter au précédent point d'accès connecté, le pilote de réseau sans fil (124) répond uniquement avec le précédent point d'accès connecté au système d'exploitation (122).
